# FASCICULE DE BREVET EUROPEEN

(11) **EP 2 878 031 B1**
(45) Date de publication et mention de la délivrance du brevet: **01.06.2016**
(21) Numéro de dépôt: 13740004.0
(22) Date de dépôt: 23.07.2013
(51) Int. Cl.: H01M 6/44, H01M 2/10, B63G 8/08, H01M 6/36

(54) **SYSTÈME DE FIXATION D'UNE PILE THERMIQUE DANS UNE SECTION D'ALIMENTATION D'UN ENGIN SOUS MARIN**
SYSTEM ZUM BEFESTIGEN EINER WÄRMEBATTERIE AN EINER LEISTUNGSVERSORGUNG EINES UNTERWASSERFAHRZEUGES
SYSTEM FOR ATTACHING A THERMAL BATTERY TO A POWER SECTION OF AN UNDERWATER CRAFT

(30) Priorité: 24.07.2012 FR 1257156
(43) Date de publication de la demande: 03.06.2015
(73) Titulaire: DCNS, 75015 Paris (FR)
(72) Inventeur: ROMAND, Jean-François, Pierre, Laurent, F-83390 Cuers (FR); MADIER, Ludovic, F-83380 Les Issambres (FR)
(74) Mandataire: Blot, Philippe Robert Emile
(86) Numéro de dépôt international: PCT/EP2013/065529
(87) Numéro de publication internationale: WO 2014/016303

(56) Documents cités:
- JP-A- 2008 034 340
- JP-A- 2008 140 710
- US-A1- 2007 141 424
- US-A1- 2008 241 625

## Description

La présente invention concerne un système de fixation d'une pile thermique dans une section d'alimentation en énergie électrique d'un engin sous marin tel que notamment une torpille.

Plus particulièrement l'invention se rapporte à un tel système qui permet d'assurer la fixation d'une pile thermique sur un flasque correspondant de cette section d'alimentation.

D'une façon générale, les systèmes de fixation connus dans l'état de la technique pour ce type d'applications comportent par exemple une chemise disposée autour et fixée sur la pile et qui est munie d'oreilles de fixation comportant des trous de passage de vis de fixation de l'ensemble sur le flasque.

Cependant, le diamètre de la pile n'est pas connu a priori car il peut évoluer lors de la fabrication de celles-ci.

Des tolérances au niveau de ce diamètre font qu'il est alors nécessaire d'utiliser des moyens de rattrapage de jeu relativement complexes tels que par exemple des patins en matériau élastomère ou encore des systèmes à vis/filet à rattrapage de jeu, etc.

Outre la complexité et le coût de réalisation de cette fixation, ces systèmes présentent également un certains nombre d'inconvénient au niveau de leur tenue mécanique.

On sait en effet que de telles torpilles telles que par exemple des torpilles dites légères, peuvent être larguées à partir d'un aéronef et que la torpille subit alors un choc relativement important lorsqu'elle entre en contact avec la surface de l'eau.

Des ruptures des systèmes de fixation des piles ont ainsi été constatées lors de tels largages.

Le but de l'invention est donc de résoudre ces problèmes.

A cet effet, l'invention a pour objet un système de fixation d'une pile thermique sur un flasque d'une section d'alimentation en énergie d'un engin sous marin tel qu'une torpille, du type comportant une chemise de fixation disposée autour et fixée sur la pile et munie d'oreilles de fixation comportant des trous de passage de vis de fixation sur le flasque, caractérisé en ce que la chemise présente la forme générale d'un C dont la partie intermédiaire et les extrémités des branches, comportent les oreilles de fixation de celle-ci sur le flasque.

Suivant d'autres caractéristiques du système de fixation selon l'invention, prises seules ou en combinaison :
- les trous des oreilles de la chemise en C présentent une dimension supérieure au diamètre des vis de fixation de la chemise sur le flasque, et
- les trous sont des trous oblongs.

L'invention sera mieux comprise à l'aide de la description qui va suivre, donnée uniquement à titre d'exemple et faite en se référant aux dessins annexés, sur lesquels :
- la figure 1 représente une vue en perspective d'un ensemble de piles destiné à être intégré dans une section d'alimentation en énergie électrique par exemple d'une torpille,
- la figure 2 représente une vue en perspective illustrant la fixation d'une pile sur un flasque, et
- la figure 3 représente une vue en perspective d'un exemple de réalisation d'une chemise de fixation de cette pile sur ce flasque.

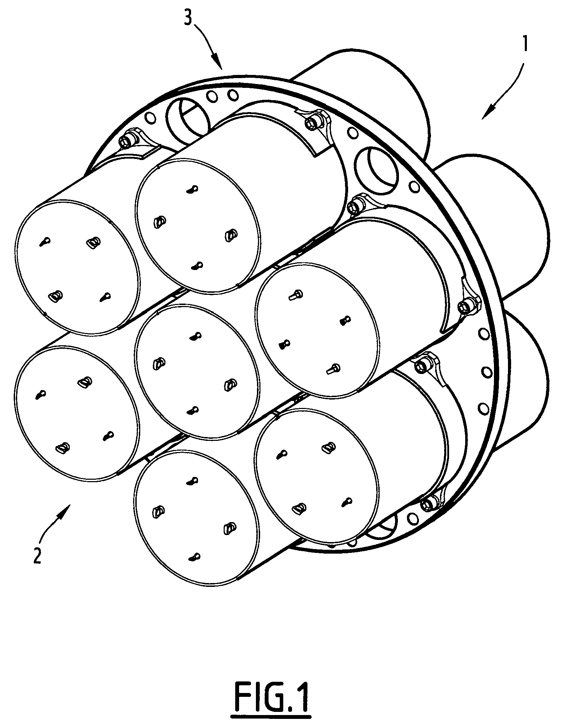

On a en effet illustré sur ces figures et en particulier sur la figure 1, un ensemble de piles thermiques destiné à entrer dans la constitution d'une section d'alimentation en énergie d'un engin sous marin tel que par exemple une torpille.

Cet ensemble est désigné par la référence générale 1 sur cette figure 1, et comporte par exemple plusieurs piles thermiques associées, dont l'une est désignée par la référence générale 2 sur cette figure 1. Ces piles sont alors fixées sur un flasque désigné par la référence générale 3, lui-même fixé dans la section d'alimentation en énergie électrique de la torpille.

Cette section peut comporter plusieurs ensembles de ce type associés les uns aux autres.

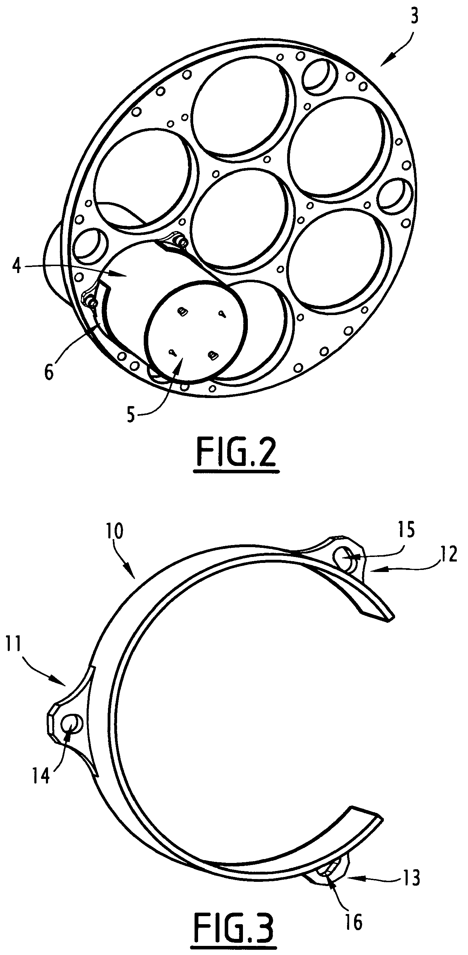

Comme cela est visible plus particulièrement sur la figure 2, le flasque 3 comporte alors des trous par exemple 4, de passage des piles par exemple 5, chaque pile étant fixée sur le flasque 3 par l'intermédiaire d'une chemise de fixation, dont l'une est désignée par la référence générale 6 sur cette figure.

Cette chemise est alors d'une part placée autour et fixée sur la pile 5 et d'autre part fixée par vissage sur le flasque 3 et comporte alors par exemple à cet effet, des oreilles de fixation munies de trous de passage de vis de fixation.

On a illustré sur la figure 3 de façon plus détaillée, un exemple de réalisation d'une telle chemise.

Sur cette figure 3, la chemise est désignée par la référence générale 10 et présente la forme générale d'un C ou de toute autre forme en anneau ouvert ou fendu, et elle peut alors être placée autour de la pile en épousant son contour et en intégrant les tolérances de fabrication de celle-ci et donc les variations de diamètres.

La partie intermédiaire et les extrémités des branches de cette chemise en C sont alors munies d'oreilles telles que par exemple les oreilles désignées par les références 11, 12 et 13.

Chaque oreille de la chemise est munie d'un trou de passage 14, 15 et 16 d'une vis de fixation de cette chemise sur le flasque correspondant de la section d'alimentation de l'engin sous marin.

Ces trous par exemple les trous 14, 15 et 16 des oreilles 11, 12 et 13 d'extrémité des branches de la chemise en C présentent une dimension supérieure au diamètre de la vis de fixation correspondante.

En fait ces trous 14, 15 et 16 peuvent être des trous oblongs permettant également à la chemise et à l'ensemble du dispositif de fixation d'absorber les tolérances de fabrication de la pile.

Ainsi, la chemise présente une certaine flexibilité permettant de l'ajuster au diamètre de la pile thermique et les trous de fixation de celle-ci ont une forme et/ou une dimension permettant de rattraper les tolérances de fabrication de la pile et de conserver une fixation sans jeu rigide et robuste de la pile sur le flasque.

On conçoit alors qu'une telle structure présente un certain nombre d'avantages notamment au niveau de sa fiabilité et sa facilité d'utilisation et de mise en oeuvre.

Bien entendu d'autres modes de réalisation encore peuvent être envisagés.

## Revendications

1. Système de fixation d'une pile thermique (5) sur un flasque (3) d'une section d'alimentation en énergie d'un engin sous marin tel qu'une torpille, du type comportant une chemise de fixation (6 ; 10) disposée autour et fixée sur la pile (5) et munie d'oreilles de fixation (11, 12, 13) comportant des trous (14, 15, 16) de passage de vis de fixation sur le flasque, **caractérisé en ce que** la chemise (6 ; 10) présente la forme générale d'un C dont la partie intermédiaire et les extrémités des branches, comportent les oreilles de fixation de celle-ci sur le flasque (3).

2. Système selon la revendication 1, **caractérisé en ce que** les trous (14, 15, 16) des oreilles (11, 12, 13) de la chemise en C (6 ; 10) présentent une dimension supérieure au diamètre des vis de fixation de la chemise sur le flasque.

3. Système selon la revendication 2, **caractérisé en ce que** les trous sont des trous oblongs.

## Patentansprüche

1. System zur Fixierung einer thermischen Batterie (5) an einem Flansch (3) eines Energieversorgungsabschnitts eines Unterwassergeräts, wie eines Torpedos, des Typs aufweisend eine Befestigungs-Buchse (6; 10), die um die Batterie (5) herum angeordnet und an dieser befestigt ist und die mit Befestigungs-Laschen (11, 12, 13) versehen ist, die Durchgangs-Löcher (14, 15, 16) für Schrauben zur Befestigung an dem Flansch haben, **dadurch gekennzeichnet, dass** die Buchse (6; 10) die allgemeine Form eines C hat, von dem der Verbindungsabschnitt und die Enden der Arme die Laschen zu ihrer Befestigung an dem Flansch (3) aufweisen.

2. System gemäß Anspruch 1, **dadurch gekennzeichnet, dass** die Löcher (14, 15, 16) der Laschen (11, 12, 13) der C-Buchse (6; 10) eine größere Abmessung als der Durchmesser der Schrauben zur Befestigung der Buchse an dem Flansch aufweisen.

3. System gemäß Anspruch 2, **dadurch gekennzeichnet, dass** die Löcher Langlöcher sind.

## Claims

1. A system for attaching a thermal battery (5) to a flange (3) of a power supply section of an underwater craft such as a torpedo, comprising a fixing sleeve (6; 10) arranged around and fixed to the battery (5) and provided with fixing lugs (11, 12, 13) comprising holes (14, 15, 16) for the passage of screws for attachment to the flange, **characterized in that** the sleeve (6; 10) is in the overall shape of a C of which the intermediate part and the ends of the branches comprise the fixing lugs for fixing this sleeve to the flange (3).

2. The system according to claim 1, **characterized in that** the holes (14, 15, 16) of the lugs (11, 12, 13) of the C-shaped sleeve (6; 10) have a dimension larger than the diameter of the screws for attaching the sleeve on the flange.

3. The system according to claim 2, **characterized in that** the holes are oblong holes.
